# EUROPÄISCHE PATENTSCHRIFT

(11) **EP 4 202 403 B1**
(45) Veröffentlichungstag und Bekanntmachung des Hinweises auf die Patenterteilung: **27.08.2025**
(21) Anmeldenummer: 22215443.7
(22) Anmeldetag: 21.12.2022
(51) Int. Cl.: G01N 9/00, G01N 11/00, G01N 35/10

(54) **VERFAHREN ZUR BEFÜLLUNG DER MESSZELLE EINES MESSGERÄTS, VISKOSIMETERS UND/ODER DICHTEMESSGERÄTS**
METHOD FOR FILLING THE MEASURING CELL OF A MEASURING DEVICE, VISCOMETER AND/OR DENSITOMETER
PROCÉDÉ DE REMPLISSAGE DE LA CELLULE DE MESURE D'UN APPAREIL DE MESURE, VISCOSIMÈTRE ET/OU APPAREIL DE MESURE DE DENSITÉ

(30) Priorität: 23.12.2021 AT 510452021
(43) Veröffentlichungstag der Anmeldung: 28.06.2023
(73) Patentinhaber: Anton Paar GmbH, 8054 Graz-Straßgang (AT)
(72) Erfinder: STELZMANN, Dieter, 8200 Sinabelkirchen (AT); SCHMIDEGG, Harald, 8074 Raaba-Grambach (AT)
(74) Vertreter: Wildhack & Jellinek Patentanwälte GmbH

(56) Entgegenhaltungen:
- WO-A1-2020/124111
- AT-B- 406 425
- AT-B1- 516 058
- DE-A1- 3 722 862
- ANONYMOUS: "Kinematic Viscometer Series SVM Series", 3 December 2021 (2021-12-03), pages 1 - 13, XP093043628, Retrieved from the Internet <URL:https://www.anton-paar.com/?eID=documentsDownload&document=58424&L=0> [retrieved on 20230502]

## Beschreibung

Die Erfindung betrifft ein Verfahren zur Befüllung der Messzelle eines Messgeräts, insbesondere eines Viskosimeters und/oder eines Dichtemessgeräts, gemäß Anspruch 1 sowie ein Messgerät gemäß Anspruch 9.

Es sind aus dem Stand der Technik unterschiedliche Vorrichtungen zur Bestimmung der Viskosität einer Flüssigkeit bekannt.

Rotationsviskosimeter bestimmen die Viskosität aus dem sich einstellenden Gleichgewicht bei der konzentrischen relativen Rotation eines Messkörpers und eines Messbechers, in dem sich die untersuchte Flüssigkeit befindet. Bekannt sind dabei Messgeräte, deren zentraler Bestandteil ein mit der zu messenden Flüssigkeit gefüllter Hohlzylinder ist, in dem ein Messteil konzentrisch in der Flüssigkeit befindlich ist.

Nach dem Searle-Prinzip wird das Messteil mit einem Antrieb im stehenden Becher rotiert und das herrschende Drehmoment über die Leistungsaufnahme des Rotationsmotors oder über den Gangunterschied der Messteile, beispielsweise durch federnde Elemente, gemessen und hinsichtlich der Viskosität des Fluids ausgewertet.

Nach dem Couette-Prinzip wird der innere Messteil vom rotierenden äußeren Messbecher und der mitrotierten Flüssigkeit mitgenommen und auch hier werden die entsprechenden Messgrößen, zB.: Drehzahl, Drehmoment, Drehwinkel, usw. hinsichtlich der Viskosität ausgewertet.

Ein modifiziertes Couette-Prinzip ist beispielsweise aus der AT516058 B1 bekannt. Hier wird ein drehbarer äußerer Hohlzylinder mit der zu untersuchenden Flüssigkeit gefüllt und ein Messzylinder, der drehbar in dieser Flüssigkeit gelagert ist, wird bei der Rotation des äußeren Hohlzylinders über die untersuchte Flüssigkeit mitrotiert.

Rotationsviskosimeter mit rotierenden und/oder stillstehenden Messbechern können so ausgeführt werden, dass ein kontinuierliches Befüllen und/oder Reinigen der Messzelle möglich ist. Anordnungen, die ein automatisiertes Durchführen der Messprobe durch die Messzelle und ein Reinigen des Messsystems, bestehend aus Messzelle, Probenentnahmevorrichtung und Zu- und Ableitungen, erlauben, können über sogenannte Probensampler und Probenentnahmevorrichtungen und Reinigungsstationen automatisierte Abläufe ermöglichen. Derartige automatisierte Rotationsviskosimeter, die kontinuierlich befüllt werden können, sind beispielsweise die SVM-Viskosimeter der Anmelderin und beispielsweise aus der AT 406 425 B8 und der AT 516 058 A1 bekannt.

DE 3722862 A1 offenbart ein weiteres Rotationsviskometer.

Nach der Messung einer Probe muss die Messzelle bzw. das gesamte Messsystem, also Messzelle plus Zu- und Ableitungen des Messgeräts von Rückständen der vermessenen Probe gereinigt werden. Die Kombination eines Messgeräts mit einem automatischen Probengeber mit Reinigungsfunktion ermöglicht diese Aufgabe ohne manuellen Eingriff. Um eine automatische Reinigungsfunktion jedoch verlässlich zu gewährleisten, muss der Probenwechsler bzw. Probengeber vorher programmiert werden und beispielsweise die Anzahl der Reinigungszyklen und die Dauer der Trocknungszeit nach der Vermessung einer Probe vorgegeben werden. Diese Parameter sind jedoch stark von der Probe selbst sowie der Wechselwirkung der Probe mit dem Reinigungs- bzw. Lösungsmittel abhängig. Wird die Anzahl der Reinigungszyklen, die Dauer des Reinigungsvorgangs oder die Trocknungszeit falsch gewählt, verbleiben Rückstände der Probe in der Messzelle bzw. dem Messgerät oder es wird die Reinigungszeit zu hoch gewählt und dadurch Ressourcen und Messzeit verschwendet.

Nachteil, der aus dem Stand der Technik bekannten Vorrichtungen und Messverfahren ist auch, dass bei Wiederholung der Messungen jeweils die Proben einen beispielsweise Samplerröhrchen oder einer Ampulle entnommen und in die Messzelle eingebracht werden müssen. Dies erfordert weiters, wie zuvor beschrieben, eine aufwändige Reinigung und verlängert daher die Messdauer bei sich wiederholenden Messungen von gleichbleibenden Proben erheblich.

Aufgabe der vorliegenden Erfindung ist es daher, ein Verfahren bereitzustellen, mit dem die Viskosität und/oder die Dichte einer Probe einfach und automatisiert und reproduzierbar bestimmt werden kann und derart die Messdauer deutlich reduziert wird.

Diese Aufgabe wird durch die Merkmale des Anspruchs 1 gelöst.

Durch das erfindungsgemäße Verfahren kann eine mehrfache Zuführung eines vorbestimmten Anteils der Probe in die Messezelle einfach gewährleistet werden, ohne dass zwischen den einzelnen Messungen die Probenleitung oder die Messzelle gereinigt werden müssen. Weiters erlaubt die erfindungsgemäße Anordnung eine besonders einfache Zuführung der Probe in die Messzelle und kann daher auch von wenig geschultem Personal durchgeführt werden. Auch sind durch die Einbringung der Probe in die Messzelle mittels der Pumpe der Druck im Aufnahmebehälter und damit in der Messzelle einfach reproduzierbar oder kann durch die Pumpe einfach konstant gehalten werden.

Besonders vorteilhafte Ausführungsformen des erfindungsgemäßen Verfahrens werden durch die Merkmale der abhängigen Ansprüche näher definiert:
Vorteilhaft kann vorgesehen sein, dass der Aufnahmebehälter einen Pumpenanschluss und einen Probenausgang aufweist, wobei der Pumpenanschluss , insbesondere im Deckel des Aufnahmebehälters in Schwerkraftrichtung über der Probensäule und/oder dem Probenausgang angeordnet ist, wobei die Pumpe eine Luftpumpe ist und Luft über die Pumpe und die Druckleitung in den Aufnahmebehälter eingebracht wird und die Probe im Aufnahmebehälter mit einem, insbesondere definierten Druck, beaufschlagt wird, wobei durch den Druck im Aufnahmebehälter die Probe über den Probenausgang in die Probenleitung und die Messzelle eingebracht wird.

Durch die Anordnung der Einmündung der Druckleitung in den Aufnahmebehälter über dem Probenausgang ist im oberen Bereich des Aufnahmebehälters ein Luftraum ausgebildet, sodass die von der Pumpe zugeführte Luft Druck auf die Probe ausübt und diese aus dem Probenausgang in die Messzelle einbringt, ohne dass die Pumpe oder die Druckleitung mit der Probe selbst in Berührung kommen.

Um eine mehrfache Vermessung einer größeren Menge von Proben durchführen zu können, kann vorgesehen sein, dass aus der Messezelle heraus eine Probenausbringleitung angeordnet ist, mit der die Probe aus der Messzelle, insbesondere in einen Abfallbehälter, ausgebracht wird, wobei in der Probenausbringleitung und/oder der Messzelle zumindest ein Ventil angeordnet ist, mit dem die Probenausbringleitung verschlossen werden kann und derart der Fluss der Probe in der Probenleitung zur Messzelle bei und/oder aus der Messzelle in der Probenausbringleitung bei Erreichen der gewünschten Füllmenge der Probe in der Messzelle unterbrochen wird. Dadurch, dass die Probe der Messzelle aus der Probenausbringleitung ausgebracht werden kann und neues Probenmaterial über den Aufnahmebehälter in die Messzelle eingebracht wird, kann derart einfach eine größere Menge von Probenmaterial bzw. die Messung mehrfach wiederholt werden, ohne die Messzelle bzw. das Messgerät aufwändig reinigen zu müssen.

Vorteilhaft kann vorgesehen sein, dass in der Probenausbringleitung zumindest ein Sensor angeordnet ist, dessen Zustand einer Steuereinheit zugeführt wird, wobei mittels des Sensors das Vorhandensein der Probe in der Probenausbringleitung und/oder Messzelle detektiert wird, wobei insbesondere bei Detektion der Probe durch den Sensor die Pumpe abgeschaltet und/oder das Ventil geschlossen wird. Durch die Anordnung des Sensors in der Probenausbringleitung kann einfach detektiert werden, ob die Probe bereits die Messzelle passiert bzw. erreicht hat und derart automatisiert die Vermessung der Probe durchgeführt werden. Durch den Sensor in der Probenausbringleitung kann weiters sichergestellt werden, dass die Messzelle vollständig mit der Probe gefüllt ist und Messfehler vermieden werden.

Um die Messzelle, die Probenleitung sowie die Probenausbringleitung einfach reinigen zu können, kann vorgesehen sein, dass die Messzelle und/oder die Probenleitung und/oder der Aufnahmebehälter und/oder die Probenausbringleitung nach der Messung durch ein, insbesondere über den Aufnahmebehälters, eingebrachtes Reinigungsmittel von Rückständen der Probe befreit wird, wobei mittels der Pumpe nach der Reinigung Luft zum Trocknen der Messzelle und/oder der Probenleitung und/oder des Aufnahmebehälters und/oder der Probenausbringleitung durch diese gepumpt wird.

Um weitere Daten der Probe zu erfassen, kann vorgesehen sein, dass in der Probenleitung oder der Probenausbringleitung zwei Sensoren, insbesondere Lichtschranken, angeordnet sind, wobei die Zeit die die Probe benötigt von dem ersten Sensor zum zweiten Sensor zu gelangen gemessen wird und daraus auf das Fließverhalten der Probe geschlossen wird.

Vorteilhaft kann durch das erfindungsgemäße Verfahren die Messung mehrfach durchgeführt werden. So kann besonders vorteilhaft vorgesehen sein, dass nach einer ersten Messung in der Messzelle die bereits vermessene Probe durch die Pumpe aus der Messzelle ausgebracht wird, wobei dann über den Aufnahmebehälter mittels der Pumpe eine weitere Menge der Probe in die Messzelle eingebracht wird und die Messung erneut durchgeführt wird, wobei insbesondere der Austausch der Probe und die Messung mehrfach durchgeführt wird.

Um die Menge der Probe zur Füllung der Messzelle einfach berechnen zu können, kann vorgesehen sein, dass die Zeit die die Probe zum Füllen der Messzelle benötigt über ein Mathematisches Modell ermittelt wird, wobei das mathematische Modelle die Temperatur der Probe und/oder der Messzelle berücksichtigt, und derart, insbesondere wiederholt, eine definierte Menge der Probe in die Messzelle eingebracht wird.

Da bei einigen Messungen der Viskosität und/oder Dichte die Probe auf eine zuvor definierte Temperatur gebracht werden muss, kann vorteilhaft vorgesehen sein, dass eine Temperiereinheit vorgesehen ist mit der die Probe im Aufnahmebehälter auf eine definierte Temperatur aufgeheizt oder abgekühlt wird. Durch die Temperiereinheit kann die Temperatur der Probe besonders einfach eingestellt und derart sichergestellt werden, dass insbesondere bei mehrfacher Wiederholung der Messung stets die gleiche Temperatur der Proben bzw. die gleichen Voraussetzungen für die Messung vorliegen.

Da insbesondere bei der Vermessung von Altöl Schwebestoffe bzw. Abriebpartikel in dem Öl bzw. der Probe vorliegen können, können derartige Partikel die Reproduzierbarkeit bzw. Genauigkeit der Messung negativ beeinflussen. Um die Partikel beim Einströmen in die Messzelle zu hindern, kann vorteilhaft vorgesehen sein, dass, insbesondere im Bereich des Aufnahmebehälters, eine magnetische Einheit, insbesondere ein Elektromagnet oder Permanentmagnet, angeordnet ist, mit der magnetische Partikel in der Probe abgesondert werden und derart verhindert wird, dass diese in die Messzelle eindringen.

Ein weiterer Aspekt der Erfindung sieht vor, ein Messgerät bereitzustellen, mit dem Proben einfach und unter wiederkehrenden, gleichbleibenden Bedingungen ohne aufwändige Handhabung vermessen werden können. Diese Aufgabe wird mit den kennzeichnenden Merkmalen des Anspruchs 9 gelöst. Erfindungsgemäß ist dabei vorgesehen, dass in der Probenleitung zwischen Pumpe und Messzelle ein, insbesondere trichterförmiger, reversibel verschließbarer Aufnahmebehälter, insbesondere ein Fülltrichter, für die Aufnahme der Probe angeordnet ist, wobei die Probe in den Aufnahmebehälter einbringbar ist, wobei der Aufnahmebehälter derart mit der Pumpe verbunden ist, dass bei Aufbringung von Druck in den Aufnahmebehälter durch die Pumpe ein Anteil der Probe aus dem Aufnahmebehälter ausgebracht und über die Probenleitung in die Messzelle einbringbar ist. Durch die erfindungsgemäße Ausbildung des Messgeräts kann die zu vermessende Probe einfach in den Aufnahmebehälter eingefüllt werden und die Probe über die Pumpe in die Messzelle befördert werden.

Eine besonders vorteilhafte Ausbildung des Messgeräts wird erreicht, indem der Aufnahmebehälter einen Pumpenanschluss und einen Probenausgang aufweist, wobei der Pumpenanschluss, insbesondere im Deckel des Aufnahmebehälters, in Schwerkraftrichtung über dem Probenausgang angeordnet ist.

Um nach Vermessung eines ersten Anteils der Probe einen weiteren Anteil der Probe vermessen zu können bzw. die Probe aus der Messzelle auszubringen, kann vorteilhaft vorgesehen sein, dass der Messzelle eine Probenausbringleitung nachgeordnet ist, mit der die Probe aus der Messzelle, insbesondere in einen Abfallbehälter, ausbringbar ist, wobei in der Probenausbringleitung und/oder der Messzelle zumindest ein Ventil angeordnet ist, mit dem der Fluss der Probe aus der Messzelle oder in der Probenausbringleitung unterbrechbar ist.

Um die Befüllung der Messzelle besonders einfach detektieren zu können, kann vorteilhaft vorgesehen sein, dass in der Probenausbringleitung zumindest ein Sensor, insbesondere eine Lichtschranke, angeordnet ist, wobei mittels des Sensors das Vorhandensein der Probe in der Probenausbringleitung und/oder der Messzelle detektierbar ist, wobei insbesondere bei Detektion der Probe durch den Sensor die Pumpe durch eine Steuereinheit abschaltbar und/oder das Ventil schließbar ausgebildet sind.

Um das Fließverhalten oder andere Werte der Probe einfach bestimmen zu können, kann vorgesehen sein, dass in der Probenleitung oder der Probenausbringleitung zwei Sensoren, insbesondere Lichtschranken, angeordnet sind, wobei das Messgerät eine Auswerteeinheit aufweist, wobei mittels der Auswerteinheit die Zeit die die Probe benötigt von dem ersten Sensor zum zweiten Sensor zu gelangen zur Ermittlung des Fließverhalten der Probe ermittelbar ist.

Wie zuvor zum Verfahren bereits beschrieben, kann eine wiederholte Messung besonders einfach durchgeführt werden, indem das Messgerät eine Steuereinheit aufweist, wobei die Steuereinheit derart ausgebildet ist, dass nach einer Messung in der Messzelle die bereits vermessene Probe durch die Pumpe aus der Messzelle ausbringbar ist und über den Aufnahmebehälter mittels der Pumpe eine weitere definierte, präzise Menge der Probe in die Messzelle einbringbar und die Messung derart mehrfach hintereinander wiederholbar ausführbar ist.

Die Temperatur der Probe kann besonders einfach eingestellt werden, indem das Messgerät eine im Bereich des Aufnahmebehälters oder um den Aufnahmebehälter angeordnete Temperiereinheit aufweist, mit der die Probe in dem Aufnahmebehälter auf eine definierte Temperatur aufheizbar oder abkühlbar ist.

Um etwaige Schwebestoffe bzw. metallische Partikel aus der Probe entfernen zu können bzw. vom Einströmen in die Messzelle abhalten zu können, kann vorgesehen sein, dass , insbesondere im Bereich des Aufnahmebehälters, eine magnetische Einheit, insbesondere ein Elektromagnet oder ein Permanentmagnet, angeordnet ist, mit der magnetische Partikel in der Probe absonderbar und/oder im Aufnahmebehälter haltbar sind.

Um einfach weitere Proben oder das Reinigungsmittel in den Aufnahmebehälter einfüllen zu können, kann vorgesehen sein, dass ein Druckablassventil im Aufnahmebehälter oder an diesem angeschlossen ist, sodass Druck aus dem Aufnahmebehälter ablassbar ist, wobei das Druckablassventil insbesondere im Bereich des Deckels des Aufnahmebehälters oder der Druckleitung angeordnet ist.

Weitere Vorteile und Ausgestaltungen der Erfindung ergeben sich aus der Beschreibung und den beiliegenden Zeichnungen.

Die Erfindung ist im Folgenden anhand von besonders vorteilhaften, aber nicht einschränkend zu verstehenden Ausführungsbeispielen in den Zeichnungen schematisch dargestellt und wird unter Bezugnahme auf die Zeichnungen beispielhaft beschrieben:
Fig. 1 zeigt eine erste Ausführungsform des erfindungsgemäßen Messgeräts in schematischer Darstellung,
Fig. 2 zeigt ein erfindungsgemäßes Messgerät mit Druckablassventil und zwei Sensoren,
Fig. 3 zeigt eine weitere Ausführungsform des erfindungsgemäßen Messgeräts mit Temperiereinheit,
Fig. 4 zeigt eine Ausführungsform des Messgeräts mit magnetischer Einheit, und
Fig. 5 zeigt eine Ausführungsform des erfindungsgemäßen Messgeräts mit unterschiedlichen Druckleitungen.

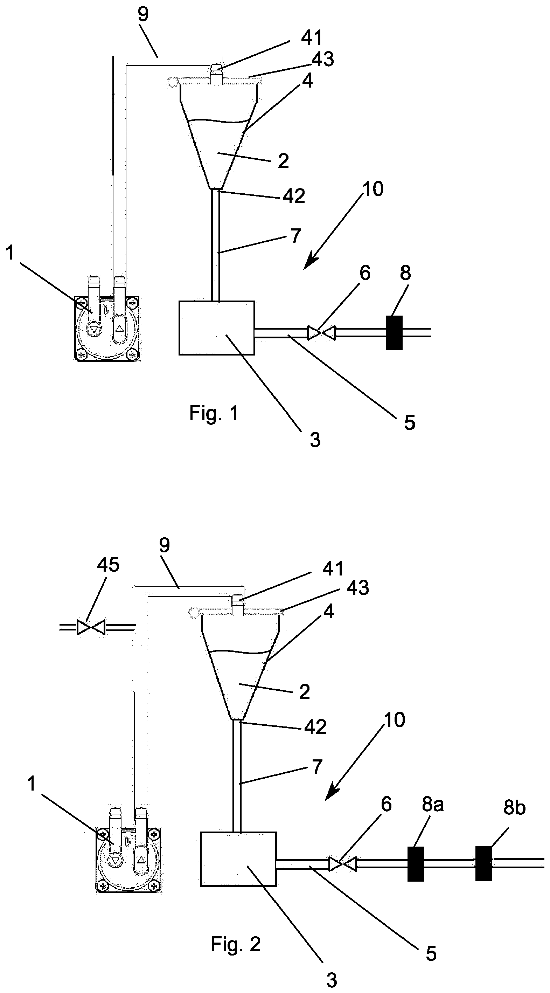

In Fig. 1 ist eine erste Ausführungsform des erfindungsgemäßen Messgeräts 10 schematisch dargestellt. Das Messgerät 10 umfasst eine Pumpe 1, die über eine Druckleitung 9 mit einem Aufnahmebehälter 4 verbunden ist. In dem Aufnahmebehälter 4 ist eine Probe 2, deren Viskosität und/oder Dichte in dem Messgerät 10 bestimmt werden soll, eingebracht. Der Aufnahmebehälter 4 ist bei der Ausführungsform der Fig. 1 trichterförmig bzw. als Fülltrichter ausgebildet. Der Aufnahmebehälter 4 umfasst einen Deckel 43, der reversibel geöffnet werden kann und über diesen die Probe 2 in den Aufnahmebehälter 4 eingebracht werden kann. Das Messgerät 10 weist weiters eine Messzelle 3 auf, in der die Messung der Viskosität und/oder Dichte erfolgt. Die Messzelle 3 ist über eine Probenleitung 7 mit dem Aufnahmebehälter 4 verbunden. Am trichterförmig zulaufenden Ende des Aufnahmebehälters 4 ist ein Probenausgang 42 angeordnet, an dem die Probenleitung 7 angeschlossen ist. Der Aufnahmebehälter 4 weist weiters einen Pumpenanschluss 41 auf, der im Deckel 43 des Aufnahmebehälters 4 angeordnet ist. Alternativ kann der Pumpenanschluss 41 auch im Aufnahmebehälter 4 angeordnet werden. Die Druckleitung 9 ist an dem Pumpenanschluss 41 angeordnet und verbindet derart den Aufnahmebehälter 4 mit der Pumpe 1. Der Probenausgang 42 des Aufnahmebehälters 4 ist bei dieser Ausführungsform am untersten Ende des trichterförmigen Aufnahmebehälters 4 angeordnet, sodass der Pumpenanschluss 41 in Schwerkraftrichtung über der Probensäule, also über der in dem Aufnahmebehälter 4 eingebrachten Probe 2 und ebenfalls in Schwerkraftrichtung über dem Probenausgang 42 angeordnet ist.

Die Pumpe 1 ist bei der Ausführungsform der Fig. 1 als Luftpumpe ausgebildet, sodass die Pumpe 1 Luft über die Druckleitung 9 und den Pumpenanschluss 41 in den Auffangbehälter 4 fördert. Durch die in dem Aufnahmebehälter 4 über der Probensäule bzw. über der Probe 2 eintretende Luft wird ein Druck im Aufnahmebehälter 4 aufgebaut und sodann die Probe 2 über die Probenleitung 7 in die Messzelle 3 eingebracht. In der Messzelle 3 wird sodann die Messung der Viskosität und/oder der Dichte der Probe 2 durchgeführt.

Das Messgerät 10 weist weiters eine Probenausbringleitung 5 auf, die der Messzelle 3 nachgeordnet ist, mit der die Probe 2 aus der Messzelle 3, beispielsweise in einen nicht dargestellten Abfallbehälter, ausgebracht wird. In der Probenausbringleitung 5 ist ein Ventil 6 angeordnet, mit dem die Probenausbringleitung 5 verschlossen werden kann. So kann beispielsweise bei Erreichen der gewünschten Füllmenge der Probe 2 in der Messzelle 3 das Ventil 6 geschlossen werden und derart der Fluss der Probe 2 in der Probenleitung 7, der Probenausbringleitung 5 und/oder der Messzelle 3 unterbrochen werden. Optional kann das Ventil 6 auch direkt in der Messzelle 3 bzw. an deren Ausgang angeordnet sein und derart der Fluss der Probe 2 auch an anderen Stellen des Messgeräts 10 unterbrochen werden.

Das Messgerät 10 ist bei der Ausführungsform der Fig. 1 als Rotationsviskosimeter ausgebildet, wobei die Messzelle 3 als Messzelle 3 des Rotationsviskosimeters ausgebildet ist. Optional kann das Messgerät 10 auch als Dichtemessgerät oder anderes Viskosimeter ausgebildet sein, wobei die Messzelle 3 optional auch mehrere Messzellen 3 bzw Messgeräte oder Messteile beispielsweise ein Rotationsviskosimeter und einen Biegeschwinger zur Messung der Viskosität und/oder Dichte der Probe 2 aufweisen kann. So kann das Messgerät beispielsweise auch einen Biegeschwinger zur Messung der Dichte umfassen dessen Messzelle 3 erfindungsgemäß befüllt und/oder gereinigt wird. Optional kann die Messzelle 3 auch Sensor zur Bestimmung des Brechungsindex ausgebildet sein und in der Messzelle 3 des Messgeräts 10 der Brechungsindex bestimmt werden und daraus die Dichte oder Viskosität der Probe 2 bestimmt werden.

Das Messgerät 10 weist einen Sensor 8 auf, der in der Probenausbringleitung 5 angeordnet ist. Der Zustand bzw. die Messwerte des Sensors 8 werden einer nicht abgebildeten Steuereinheit zugeführt, sodass mittels des Sensors 8 das Vorhandensein der Probe 2 in der Probenausbringleitung 5 und/oder der Messzelle 3 detektiert wird. Der Sensor 8 kann beispielsweise als Lichtschranke, induktiver oder kapazitiver Sensor ausgebildet sein. Registriert der Sensor 8, dass die Probe 2 bereits den Sensor 8 erreicht hat und damit die Messzelle 3 vollständig mit der Probe 2 gefüllt ist, kann das Vorhandensein der Probe 2 beim Sensor 8 detektiert werden und an die Steuereinheit weitergeleitet werden und sodann beispielsweise die Pumpe 1 abgeschaltet und/oder das Ventil 6 geschlossen werden.

Fig. 2 zeigt eine zweite Ausführungsform des erfindungsgemäßen Messgeräts 10. Das Messgerät 10 weist, wie zu Fig. 1 beschrieben, eine Pumpe 1, einen Aufnahmebehälter 4 sowie eine Probenleitung 7 und eine Messzelle 3 auf. In der Probenausbringleitung 5 der Ausführungsform der Fig. 2 sind zwei Sensoren 8a, 8b angeordnet. Die zwei Sensoren 8a, 8b sind insbesondere als Lichtschranken oder induktiver oder kapazitive Sensoren ausgebildet, sodass diese die Probe 2 bei Passieren der Sensoren 8a, 8b detektieren können. Die Sensoren 8a, 8b sind mit der Steuereinheit verbunden, sodass, wenn die Probe 2 den jeweiligen Sensor 8a, 8b passiert, dies an die Steuereinheit weitergegeben wird. Durch die Anordnung des ersten Sensor 8a in der Probenausbringleitung 5 vor dem zweiten Sensor 8b kann beispielsweise die Zeit, die die Probe 2 zum Fließen vom ersten Sensor 8a zum zweiten Sensor 8b benötigt, gemessen werden und daraus das Fließverhalten der Probe 2 bestimmt bzw. auf das Fließverhalten geschlossen werden.

Das Messgerät 10 der Fig. 2 weist weiters ein Druckablassventil 45 auf, das in der Druckleitung 9 angeordnet bzw. mit dieser verbunden ist. Über das Ablassventil 45 kann der Druck im Aufnahmebehälter 4, der über die Pumpe 1 aufgebracht wurde, abgelassen werden und derart das Nachfüllen der Probe 2 in den Trichter bzw. den Aufnahmebehälter 4 erleichtert werden. Optional kann das Druckablassventil 45 auch an anderen Bereichen des Messgeräts 10 angeordnet sein, beispielsweise im Deckel 43 des Aufnahmebehälters 4 oder im oberen Bereich des Aufnahmebehälters 4 über der Probensäule.

Im Folgenden wird das erfindungsgemäße Verfahren anhand der bevorzugten Ausführungsform der Fig. 2 beispielhaft beschrieben:
Zu Beginn wird der Deckel 43 des Aufnahmebehälters 4 geöffnet und die Probe 2, deren Dichte und/oder Viskosität bestimmt werden soll, in den Aufnahmebehälter 4 eingefüllt. Der Aufnahmebehälter 4 bzw. der Deckel 43 wird sodann wieder verschlossen, sodass dieser insbesondere hermetisch dicht gegenüber der Umgebung verschlossen ist. Über die Pumpe 1 und die Druckleitung 9 wird sodann Luft in den oberen Teil des Aufnahmebehälters 4 über die Probensäule eingebracht und der Druck im Aufnahmebehälter 4 erhöht. Durch die Erhöhung des Drucks im Aufnahmebehälter 4 wird die Probe 2 über die Probenleitung 7 in die Messzelle 3 eingebracht. Erreicht nun die Probe 2 die Messzelle 3 wird das Ventil 6 geschlossen und der Fluss der Probe 2 unterbrochen. Sodann wird die Messung der Probe 2 in der Messzelle 3 durchgeführt und die Dichte und/oder Viskosität der Probe 2 bestimmt. Nach Beendigung der Messung kann das Ventil 6 wieder geöffnet werden und weiter Druck durch die Pumpe 1 über den Aufnahmebehälter 4 und die Probenleitung 7 aufgebracht werden, sodass die Probe 2 in der Probenausbringleitung 5 aus der Messzelle 3 ausgebracht wird. Wie in Fig. 2 dargestellt, kann die Probe sodann den ersten Sensor 8a und den zweiten Sensor 8b passieren und derart auf die Fließeigenschaften bzw. die Fließgeschwindigkeit der Probe 2 geschlossen werden. Sollte die Messung der Dichte und/oder Viskosität mehrfach ausgeführt werden, kann beispielsweise nach der ersten Messung die bereits vermessene Probe 2 aus der Messzelle 3 über die Probenausbringleitung 5 ausgebracht werden und über die Pumpe 1 und die Probenleitung 7 eine frische bzw. weitere in dem Aufnahmebehälter 4 vorhandene Probe 2 in die Messzelle 3 eingebracht werden. Sobald die gewünschte Menge der Probe 2 wieder in der Messzelle 3 eingebracht wurde, schließt das Ventil 6 erneut und die Messung in der Messzelle 3 wird wiederholt. Derart kann automatisiert eine mehrfach hintereinander erfolgte Messung der Probe 2 bzw. einzelner definierter Mengen der Probe 2 durchgeführt werden. Die Handhabung wird dadurch vereinfacht und auch Messreihen, die eine mehrfache Vermessung der Proben 2 bzw. der Vermessung einer großen Menge von Proben 2 benötigen, können automatisiert und somit einfach und auch durch gering geschultes Personal durchgeführt werden.

Alternativ zu den in den Fig. 1 und 2 dargestellten Ausführungsformen des Messgeräts 10 kann der Sensor 8 bzw. die Sensoren 8a, 8b auch in der Probenausbringleitung 5 vor dem Ventil 6 bzw. auch in der Probenleitung 7 oder direkt am Ausgang der Messzelle 3 angeordnet sein.

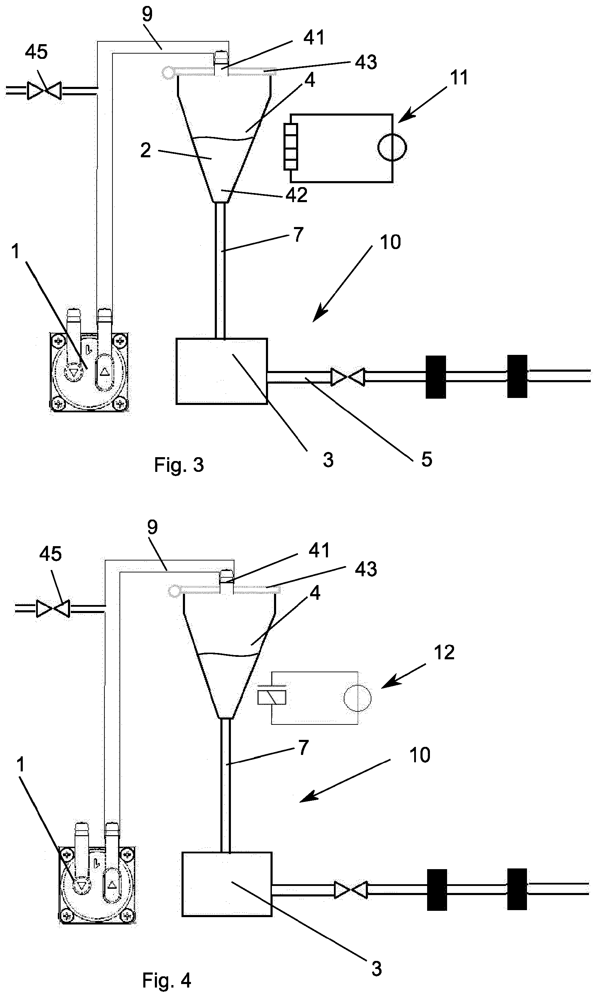

In Fig. 3 ist eine weitere Ausführungsform des erfindungsgemäßen Messgeräts 10 dargestellt. Das Messgerät 10 weist bei dieser Ausführungsform eine Temperiereinheit 11 auf, die im Bereich des Aufnahmebehälters 4 angeordnet ist. Über die Temperiereinheit 11 kann die Temperatur der Probe 2 im Aufnahmebehälter 4 eingestellt werden und so das Fließverhalten der Probe 2 und deren Temperatur definiert vorgegeben werden. Durch die Temperiereinheit 11 ist es möglich die Probe 2 aufzuheizen bzw. abzukühlen und immer gleiche Bedingungen bei der Vermessung der Probe 2 in der Messzelle 3 zu schaffen. Alternativ zu der in der Fig. 3 dargestellten Ausführungsform kann die Temperiereinheit 11 auch um den Aufnahmebehälter 4 vollständig angeordnet sein sowie auch die Probenleitung 7 und/oder die Messzelle 3 beeinflussen, sodass in diesen eine konstante Temperatur eingestellt werden kann.

In Fig. 4 ist eine weitere Ausführungsform des erfindungsgemäßen Messgeräts 10 schematisch abgebildet. Das Messgerät 10 weist bei dieser Ausführungsform eine magnetische Einheit 12 auf, die als Elektromagnet ausgebildet ist und im Bereich des Fülltrichters bzw. des Aufnahmebehälters 4 angeordnet ist. Durch die magnetische Einheit 12 wird eine Magnetfalle im Bereich des Aufnahmebehälters 4 bewirkt, sodass etwaige Schwebepartikel, die in der Probe 2 angeordnet sind, durch die magnetische Einheit 12 am Verlassen des Aufnahmebehälters 4 gehindert bzw. im Bereich der magnetischen Einheit 12 gefangen werden können. Insbesondere bei Gebrauchtölen können immer wieder auftretende magnetische Abriebteile derart gefangen und ein negativer Einfluss auf die Messung bzw. deren Eintreten in die Messzelle 3 verhindert werden.

Eine bevorzugte Ausführungsform des erfindungsgemäßen Verfahrens sieht vor, dass nach Vermessung der Probe 2 in der Messzelle 3 in den Aufnahmebehälter 4 ein Reinigungsmittel eingebracht wird und dieses mittels der Pumpe 1 in die Probenleitung 7, die Messzelle 3 sowie die Probenausbringleitung 5 transportiert wird. Das Reinigungsmittel wird dann mit der Pumpe 1 durch alle Teile des Messgeräts 10 gepumpt und eine zuverlässige und einfache Reinigung der Messzelle 3 und der Teile des Messgeräts 10 erreicht. Durch die Ausbildung der Pumpe 1 als Luftpumpe kann sodann Luft über die Druckleitung 9, den Aufnahmebehälter 4 und die Probenleitung 7 in die Messzelle 3 eingebracht werden und Rückstände des Reinigungsmittels über die Probenausbringleitung 5 ausgeblasen bzw. die einzelnen Teile des Messgeräts 10 getrocknet werden. Weiters ist es möglich, durch die Ausbildung der Pumpe 1 als Luftpumpe Druck innerhalb des Messgeräts 10 aufzubauen, sodass die Probe 2 bzw. deren Rückstände beispielsweise durch pulsierendes Öffnen und Schließen des Ventils 6 ausgeblasen werden. So können beispielsweise auch in dem Aufnahmebehälter 4 vorhandene Partikel, die durch die magnetische Einheit 12 gefangen wurden, aus dem Aufnahmebehälter 4 und die Probenausbringleitung ausgepresst bzw. ausgeblasen werden.

Alternativ kann anstelle der Ausbildung der Pumpe 1 als Luftpumpe auch andere Gase oder Schutzgase mit der Pumpe in den Aufnahmebehälter 4 befördert werden und so der nötige Druck aufgebaut werden.

Optional kann die Menge, der in die Messzelle 3 eingebrachten Probe 2 auch durch ein Mathematisches Modell ermittelt werden. Das mathematische Modell oder kann dabei vorteilhaft die Temperatur der Probe 2 und/oder der Messzelle 3 berücksichtigen, sodass eine berechnete, definierte Menge der Probe 2 in die Messzelle 3 eingebracht wird. So kann die Öffnungsdauer des Ventils 6 oder die Einschaltdauer der Pumpe 1 an die Ergebnisse des mathematischen Modells angepasst werden.

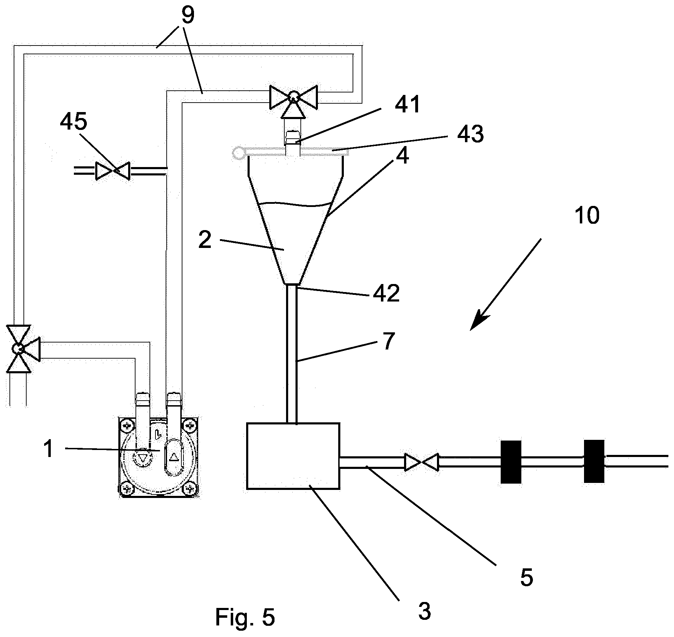

In Fig. 5 ist eine weitere optionale Ausführungsform des erfindungsgemäßen Messgeräts abgebildet. An der Pumpe sind mehrere Druckleitungen 9 angeordnet, sodass diese beispielsweise über Mehrwegeventile den Strom der Luft aus der Pumpe 1 unterschiedliche leiten können. So kann beispielsweise durch unterschiedliche Schaltung der Ventile die Luft und damit der Druck im Aufnahmebehälter 4 verändert werden und beispielsweise abwechselnd ein Über- und Unterdruck erzeugt werden, sodass die Probe 2 in den Leitungen gesaugt bzw gedrückt wird und so auch die Strömungsrichtung als auch die Druckverhältnisse in der Messzelle 3 verändert und eingestellt werden können.

Alternativ zu der in den Fig. 1 bis 5 trichterförmigen Ausbildung des Aufnahmebehälters 4 sind jede andere Form, eckig oder rund, denkbar, wobei auch beispielsweise eine rechteckige Grundform mit nach unten spitz zulaufender Trichterform im Sinne der Erfindung umfasst sind.

Optional kann die Qualität des Spülvorgangs und die Reinheit der Messzelle 3 bzw. des Messsystems bzw des Messgeräts 10 der vorliegenden Erfindung in einer nicht dargestellten Ausführungsform noch besser bestimmt werden, wenn neben der Viskosität des die Messzelle 3 durchströmenden Reinigungsmittels zumindest ein weiterer physikalischer Parameter der Probe 2 und/oder der Reinigungsflüssigkeit im Betrieb bestimmt wird. So kann beispielsweise ein weiterer Parameter für die Viskosität, die Dichte, der Brechungsindex und/oder die Trübung des die Messzelle 3 passierenden Reinigungsmittels durch zumindest eine zusätzlich in der Messzelle 3 angeordneten und/oder eine der Messzelle 3 nachgelagerten Messeinheit oder ein weiteres Messgerät 10 gemessen werden. Die gemessene Viskosität und/oder die gemessene Dichte und/oder der gemessene Brechungsindex und/oder die gemessene Trübung kann dann auch zur Aussage über die Reinheit des Messgeräts 10 bzw. der Messzelle 3 herangezogen werden. Das zumindest eine weitere Messgerät wird dazu bevorzugt der Messzelle 3 des Messgeräts 10nachgelagert angeordnet, kann aber auch ggf. durch Änderung der Spül- bzw. Durchflussrichtung vor- oder nachgelagert angeordnet sein. So kann beispielsweise es ein Viskosimeter mit einem Dichtemessgerät kombiniert sein, wie es beispielsweise in der WO2020124111 bzw. der AT522151 A1 beschrieben wird.

Alternativ zu der in den Ausführungen beschriebenen Ausbildung als Rotationsviskosimeter, kann das Messgerät selbst auch als Dichtemessgerät beispielsweise als Biegeschwinger ausgebildet sein. Oder die Kombination wie zuvor erwähnt aus einem Viskosimeter und einem Dichtemessgerät oder einem Biegeschwinger mit jeweils zwei separaten Messzellen 3 ausgebildet sein. So kann mit dem Biegeschwinger bzw dem Dichtemessgerät optional die Dichte des die Messzelle 5 passierenden Mediums bzw. der passierenden Probe 2 bestimmt werden.

Alternativ kann vorgesehen sein, dass eine weitere Messzelle 3 oder eine weitere Messeinheit der Messzelle 3 vor- oder nachgelagert in dem Messgerät 10 oder dem Messgerät 10 vor- oder nachgelagert angeordnet ist und mittels dieser Messeinheit die Trübung und/oder der Brechungsindex des die Messzelle 5 passierenden Mediums bzw. der passierenden Probe 2 bestimmt wird. Derartige Messgeräte, die die Trübung einer Flüssigkeit ermitteln, beruhen auf der Schwächung der Intensität von Lichtstrahlung beim Durchgang durch ein fluides Medium. Durch Streuung der Lichtstrahlung an im Medium befindlichen Teilchen wird der Grad der Trübung ermittelt und werden in bekannten kommerziell erhältlichen Systemen durch Messung der Abschwächung in Transmission oder Messung des Streulichts in seitlicher Anordnung bestimmt.

## Patentansprüche

1. Verfahren zur Befüllung der Messzelle (3) eines Messgeräts (10), eines Viskosimeters und/oder eines Dichtemessgeräts, insbesondere eines Rotationsviskosimeters, wobei durch eine Pumpe (1) eine Probe (2) über eine Probenleitung (7) in die Messzelle (3) eingebracht wird, und wobei in der Messzelle (3), insbesondere dynamische, Viskosität und/oder Dichte der Probe (2) bestimmt wird,
**wobei** in der Probenleitung (7) zwischen der Pumpe (1) und der Messzelle (3) ein, insbesondere trichterförmiger, reversibel öffenbarer Aufnahmebehälter (4), insbesondere ein Fülltrichter, für die Probe (2) angeordnet ist,
- wobei der Aufnahmebehälter (4) geöffnet wird und die Probe (2) in den Aufnahmebehälter (4) eingebracht wird, wonach der Aufnahmebehälter (4) verschlossen wird,
- wobei der Aufnahmebehälter (4) derart mit der Pumpe (1) über eine Druckleitung (9) verbunden ist, dass bei Aufbringung von Druck in den Aufnahmebehälter (4) ein Anteil der Probe (2) aus dem Aufnahmebehälter (4) ausgebracht und in die Messzelle (3) eingebracht wird.

2. Verfahren nach Anspruch 1, **dadurch gekennzeichnet, dass** der Aufnahmebehälter (4) einen Pumpenanschluss (41) und einen Probenausgang (42) aufweist, wobei der Pumpenanschluss (41), insbesondere im Deckel (43) des Aufnahmebehälters (4) in Schwerkraftrichtung über der Probensäule und/oder dem Probenausgang (42) angeordnet ist,
- wobei die Pumpe (1) eine Luftpumpe ist und Luft über die Pumpe (1) und die Druckleitung (9) in den Aufnahmebehälter (4) eingebracht wird und die Probe (2) im Aufnahmebehälter (4) mit einem, insbesondere definierten Druck, beaufschlagt wird,
- wobei durch den Druck im Aufnahmebehälter (4) die Probe über den Probenausgang (42) in die Probenleitung (7) und die Messzelle (3) eingebracht wird.

3. Verfahren nach Anspruch 1 oder 2, **dadurch gekennzeichnet, dass** aus der Messezelle (3) heraus eine Probenausbringleitung (5) angeordnet ist, mit der die Probe aus der Messzelle (3), insbesondere in einen Abfallbehälter, ausgebracht wird, wobei in der Probenausbringleitung (5) und/oder der Messzelle (3) zumindest ein Ventil (6) angeordnet ist, mit dem die Probenausbringleitung (5) verschlossen werden kann und derart der Fluss der Probe (2) in der Probenleitung (7) zur Messzelle (3) bei und/oder aus der Messzelle (3) in der Probenausbringleitung (5) bei Erreichen der gewünschten Füllmenge der Probe (2) in der Messzelle (3) unterbrochen wird.

4. Verfahren nach einem der vorangehenden Ansprüche, **dadurch gekennzeichnet, dass** in der Probenausbringleitung (5) zumindest ein Sensor (8) angeordnet ist, dessen Zustand einer Steuereinheit zugeführt wird, wobei mittels des Sensors (8) das Vorhandensein der Probe (2) in der Probenausbringleitung (5) und/oder Messzelle (3) detektiert wird, wobei insbesondere bei Detektion der Probe (2) durch den Sensor (8) die Pumpe (1) abgeschaltet und/oder das Ventil (6) geschlossen wird.

5. Verfahren nach einem der vorangehenden Ansprüche, **dadurch gekennzeichnet, dass** die Messzelle (3) und/oder die Probenleitung (7) und/oder der Aufnahmebehälter (4) und/oder die Probenausbringleitung (5) nach der Messung durch ein, insbesondere über den Aufnahmebehälters (4), eingebrachtes Reinigungsmittel von Rückständen der Probe (2) befreit wird, wobei mittels der Pumpe (1) nach der Reinigung Luft zum Trocknen der Messzelle (3) und/oder der Probenleitung und/oder des Aufnahmebehälters (4) und/oder der Probenausbringleitung (5) durch diese gepumpt wird.

6. Verfahren nach einem der vorangehenden Ansprüche, **dadurch gekennzeichnet, dass** in der Probenleitung (7) oder der Probenausbringleitung (5) zwei Sensoren (8a, 8b), insbesondere Lichtschranken, angeordnet sind, wobei die Zeit die die Probe (2) benötigt von dem ersten Sensor (8a) zum zweiten Sensor (8b) zu gelangen gemessen wird und daraus auf das Fließverhalten der Probe (2) geschlossen wird.

7. Verfahren nach einem der vorangehenden Ansprüche, **dadurch gekennzeichnet, dass** nach einer ersten Messung in der Messzelle (3) die bereits vermessene Probe (2) durch die Pumpe (1) aus der Messzelle (3) ausgebracht wird, wobei dann über den Aufnahmebehälter (4) mittels der Pumpe (1) eine weitere Menge der Probe (2) in die Messzelle (3) eingebracht wird und die Messung erneut durchgeführt wird, wobei insbesondere der Austausch der Probe (2) und die Messung mehrfach durchgeführt wird, und/oder
dass die Zeit die die Probe (2) zum Füllen der Messzelle (3) benötigt über ein Mathematisches Modell ermittelt wird, wobei das mathematische Modelle die Temperatur der Probe (2) und/oder der Messzelle (3) berücksichtigt, und derart, insbesondere wiederholt, eine definierte Menge der Probe (23) in die Messzelle (3) eingebracht wird.

8. Verfahren nach einem der vorangehenden Ansprüche, **dadurch gekennzeichnet, dass** eine Temperiereinheit (11) vorgesehen ist mit der die Probe (2) im Aufnahmebehälter (4) auf eine definierte Temperatur aufgeheizt oder abgekühlt wird, und/oder
dass, insbesondere im Bereich des Aufnahmebehälters (4), eine magnetische Einheit, insbesondere ein Elektromagnet (12) oder Permanentmagnet, angeordnet ist, mit der magnetische Partikel in der Probe (2) abgesondert werden und derart verhindert wird, dass diese in die Messzelle (3) eindringen.

9. Messgerät (10), insbesondere Viskosimeter oder Rotationsviskosimeter, zur Messung der, insbesondere dynamische, Viskosität und/oder Dichte einer Probe (2), insbesondere zur Durchführung eines Verfahrens nach einem der Ansprüche 1 bis 8, umfassend zumindest eine Messzelle (3) und eine Pumpe (1), wobei die Pumpe (1) über eine Probenleitung (7) mit der Messzelle (3) verbunden ist, **dadurch gekennzeichnet, dass** in der Probenleitung (7) zwischen Pumpe (1) und Messzelle (3) ein, insbesondere trichterförmiger, reversibel verschließbarer Aufnahmebehälter (4), insbesondere ein Fülltrichter, für die Aufnahme der Probe (2) angeordnet ist, wobei die Probe (2) in den Aufnahmebehälter (4) einbringbar ist, wobei der Aufnahmebehälter (4) derart mit der Pumpe (1) verbunden ist, dass bei Aufbringung von Druck in den Aufnahmebehälter (4) durch die Pumpe (1) ein Anteil der Probe (2) aus dem Aufnahmebehälter (4) ausgebracht und über die Probenleitung (7) in die Messzelle (3) einbringbar ist.

10. Messgerät (10) nach Anspruch 9, **dadurch gekennzeichnet, dass** der Aufnahmebehälter (4) einen Pumpenanschluss (41) und einen Probenausgang (42) aufweist, wobei der Pumpenanschluss (41), insbesondere im Deckel (43) des Aufnahmebehälters (4), in Schwerkraftrichtung über dem Probenausgang (42) angeordnet ist.

11. Messgerät (10) nach einem der Ansprüche 9 oder 10, **dadurch gekennzeichnet, dass** der Messzelle (3) eine Probenausbringleitung (5) nachgeordnet ist, mit der die Probe aus der Messzelle (3), insbesondere in einen Abfallbehälter, ausbringbar ist, wobei in der Probenausbringleitung (5) und/oder der Messzelle (3) zumindest ein Ventil (6) angeordnet ist, mit dem der Fluss der Probe (2) aus der Messzelle (3) oder in der Probenausbringleitung (5) unterbrechbar ist.

12. Messgerät (10) nach Anspruch 11, **dadurch gekennzeichnet, dass** in der Probenausbringleitung (5) zumindest ein Sensor (8), insbesondere eine Lichtschranke, angeordnet ist, wobei mittels des Sensors (8) das Vorhandensein der Probe (2) in der Probenausbringleitung (5) und/oder der Messzelle (3) detektierbar ist, wobei insbesondere bei Detektion der Probe (2) durch den Sensor (8) die Pumpe (1) durch eine Steuereinheit abschaltbar und/oder das Ventil (6) schließbar ausgebildet sind.

13. Messgerät (10) nach einem der Ansprüche 9 bis 12, **dadurch gekennzeichnet, dass** in der Probenleitung (7) oder der Probenausbringleitung (5) zwei Sensoren (8a, 8b), insbesondere Lichtschranken, angeordnet sind, wobei das Messgerät (10) eine Auswerteeinheit aufweist, wobei mittels der Auswerteinheit die Zeit die die Probe (2) benötigt von dem ersten Sensor (8a) zum zweiten Sensor (8b) zu gelangen zur Ermittlung des Fließverhalten der Probe (2) ermittelbar ist.

14. Messgerät (10) nach einem der Ansprüche 9 bis 13, **dadurch gekennzeichnet, dass** das Messgerät (10) eine Steuereinheit aufweist, wobei die Steuereinheit derart ausgebildet ist, dass nach einer Messung in der Messzelle (3) die bereits vermessene Probe (2) durch die Pumpe (1) aus der Messzelle (3) ausbringbar ist und über den Aufnahmebehälter (4) mittels der Pumpe (1) eine weitere definierte, präzise Menge der Probe (2) in die Messzelle (3) einbringbar und die Messung derart mehrfach hintereinander wiederholbar ausführbar ist,
und/oder
dass ein Druckablassventil (45) im Aufnahmebehälter (4) oder an diesem angeschlossen ist, sodass Druck aus dem Aufnahmebehälter (4) ablassbar ist, wobei das Druckablassventil (45) insbesondere im Bereich des Deckels des Aufnahmebehälters (4) oder der Druckleitung (9) angeordnet ist.

15. Messgerät (10) nach einem der Ansprüche 9 bis 14, **dadurch gekennzeichnet, dass** das Messgerät (10) eine im Bereich des Aufnahmebehälters (4) oder um den Aufnahmebehälter (4) angeordnete Temperiereinheit (11) aufweist, mit der die Probe (2) in dem Aufnahmebehälter (4) auf eine definierte Temperatur aufheizbar oder abkühlbar ist und/oder
dass, insbesondere im Bereich des Aufnahmebehälters (4), eine magnetische Einheit (12), insbesondere ein Elektromagnet oder ein Permanentmagnet, angeordnet ist, mit der magnetische Partikel in der Probe (2) absonderbar und/oder im Aufnahmebehälter (4) haltbar sind.

## Claims

1. Method for filling the measuring cell (3) of a measuring appliance (10), a viscometer and/or a density meter, in particular a rotational viscometer, wherein a sample (2) is introduced via a sample line (7) into the measuring cell (3) by a pump (1), and wherein in the measuring cell (3) the, in particular dynamic, viscosity and/or density of the sample (2) is determined,
**wherein** in the sample line (7) between the pump (1) and the measuring cell (3) an, in particular funnel-shaped, reversibly openable receiving container (4), in particular a filling funnel, for the sample (2) is arranged,
- wherein the receiving container (4) is opened and the sample (2) is introduced into the receiving container (4), after which the receiving container (4) is closed,
- wherein the receiving container (4) is connected to the pump (1) via a pressure line (9) such that, when pressure is applied into the receiving container (4) a portion of the sample (2) is output from the receiving container (4) and introduced into the measuring cell (3).

2. Method according to claim 1, **characterized in that** the receiving container (4) has a pump connection (41) and a sample outlet (42), wherein the pump connection (41) is arranged above the sample column and/or the sample outlet (42), in particular in the lid (43) of the receiving container (4), in gravitational direction,
- wherein the pump (1) is an air pump and air is introduced via the pump (1) and the pressure line (9) into the receiving container (4) and the sample (2) in the receiving container (4) is charged with an, in particular defined pressure,
- wherein as a result of the pressure in the receiving container (4) the sample is introduced via the sample outlet (42) into the sample line (7) and the measuring cell (3).

3. Method according to claim 1 or 2, **characterized in that** a sample discharge line (5) is arranged coming out of the measuring cell (3) and is used to discharge the sample from the measuring cell (3), in particular into a waste container, wherein in the sample discharge line (5) and/or the measuring cell (3) at least one valve (6) is arranged, by which the sample discharge line (5) can be closed and the flow of the sample (2) in the sample line (7) to the measuring cell (3) and/or from the measuring cell (3) into the sample discharge line (5) is interrupted when the desired filling quantity of the sample (2) in the measuring cell (3) is reached.

4. Method according to any one of the preceding claims, **characterized in that** in the sample discharge line (5) at least one sensor (8) is arranged, the status of which is sent to a control unit, wherein by means of the sensor (8) the presence of the sample (2) in the sample discharge line (5) and/or measuring cell (3) is detected, wherein in particular on the detection of the sample (2) by the sensor (8) the pump (1) is switched off and/or the valve (6) is closed.

5. Method according to any one of the preceding claims, **characterized in that** the measuring cell (3) and/or the sample line (7) and/or the receiving container (4) and/or the sample discharge line (5) is cleared of residues of the sample (2) after measurement by a cleaning agent which is introduced, in particular via the receiving container (4), wherein by means of the pump (1) after cleaning air for drying the measuring cell (3) and/or the sample line and/or the receiving container (4) and/or the sample discharge line (5) is pumped through the latter.

6. Method according to any one of the preceding claims, **characterized in that** in the sample line (7) or the sample discharge line (5) two sensors (8a, 8b), in particular light barriers, are arranged, wherein the time that the sample (2) needs to get from the first sensor (8a) to the second sensor (8b) is measured and from this the flow behavior of the sample (2) is determined.

7. Method according to any one of the preceding claims, **characterized in that** after a first measurement in the measuring cell (3), the already measured sample (2) is discharged out of the measuring cell (3) by the pump (1), wherein a further quantity of the sample (2) is then introduced via the receiving container (4) into the measurement cell (3) by means of the pump (1) and the measurement is performed again, wherein in particular the exchange of the sample (2) and the measurement is performed multiple times, and/or
**in that** the time that the sample (2) needs for filling the measuring cell (3) is determined by a mathematical model, wherein the mathematical model takes into consideration the temperature of the sample (2) and/or the measuring cell (3), and such that, in particular repeatedly, a defined quantity of the sample (23) is introduced into the measuring cell (3).

8. Method according to any one of the preceding claims, **characterized in that** a temperature control unit (11) is provided with which the sample (2) in the receiving container (4) is heated or cooled to a defined temperature, and/or
**in that**, in particular in the region of the receiving container (4), a magnetic unit, in particular an electromagnet (12) or permanent magnet, is arranged, by which magnetic particles in the sample (2) are separated and the latter are thereby prevented from penetrating into the measuring cell (3).

9. Measuring appliance (10), in particular a viscometer or rotational viscometer, for measuring the, in particular dynamic, viscosity and/or density of a sample (2), in particular for performing a method according to any one of claims 1 to 8, comprising at least one measuring cell (3) and a pump (1), wherein the pump (1) is connected via a sample line (7) to the measuring cell (3), **characterized in that** in the sample line (7) between the pump (1) and measuring cell (3) an, in particular funnel-shaped, reversibly closable receiving container (4), in particular a filling funnel, for receiving the sample (2) is arranged, wherein the sample (2) can be introduced into the receiving container (4), wherein the receiving container (4) is connected to the pump (1) such that with the application of pressure into the receiving container (4) by the pump (1) a portion of the sample (2) is discharged from the receiving container (4) and can be introduced via the sample line (7) into the measuring cell (3).

10. Measuring appliance (10) according to claim 9, **characterized in that** the receiving container (4) has a pump connection (41) and a sample outlet (42), wherein the pump connection (41), in particular in the lid (43) of the receiving container (4), is arranged in gravitational direction above the sample outlet (42).

11. Measuring appliance (10) according to any one of claims 9 or 10, **characterized in that** a sample discharge line (5) is arranged downstream of the measuring cell (3), with which sample discharge line the sample can be discharged from the measuring cell (3), in particular into a waste container, wherein in the sample discharge line (5) and/or the measuring cell (3) at least one valve (6) is arranged, by which the flow of the sample (2) from the measuring cell (3) or in the sample discharge line (5) can be interrupted.

12. Measuring appliance (10) according to claim 11, **characterized in that** in the sample discharge line (5) at least one sensor (8), in particular a light barrier, is arranged, wherein by means of the sensor (8) the presence of the sample (2) in the sample discharge line (5) and/or the measuring cell (3) can be detected, wherein in particular on detecting the sample (2) with the sensor (8) the pump (1) is configured to be switched off by a control unit and/or the valve (6) is configured to be closable.

13. Measuring appliance (10) according to any one of claims 9 to 12, **characterized in that** in the sample line (7) or the sample discharge line (5) two sensors (8a, 8b), in particular light barriers, are arranged, wherein the measuring appliance (10) has an evaluation unit, wherein by means of the evaluation unit the time that the sample (2) needs to get from the first sensor (8a) to the second sensor (8b) can be determined to determine the flow behavior of the sample (2).

14. Measuring appliance (10) according to any one of claims 9 to 13, **characterized in that** the measuring appliance (10) has a control unit, wherein the control unit is configured such that after a measurement in the measuring cell (3) the already measured sample (2) can be discharged by the pump (1) out of the measuring cell (3) and a further defined, precise quantity of the sample (2) can be introduced into the measuring cell (3) via the receiving container (4) by means of the pump (1), and the measurement can be repeated several times in succession in this manner. and/or
**in that** a pressure relief value (45) is connected in the receiving container (4) or on the latter, so that pressure can be discharged from the receiving container (4), wherein the pressure relief valve (45) is arranged in particular in the region of the lid of the receiving container (4) or the pressure line (9).

15. Measuring appliance (10) according to any one of claims 9 to 14, **characterized in that** the measuring appliance (10) has a temperature control unit (11) arranged in the region of the receiving container (4) or around the receiving container (4), with which temperature control unit the sample (2) can be heated or cooled in the receiving container (4) to a defined temperature and/or
**in that**, in particular in the region of the receiving container (4), a magnetic unit (12), in particular an electromagnet or a permanent magnet, is arranged, by which magnetic particles in the sample (2) can be separated and/or stored in the receiving container (4).

## Revendications

1. Procédé de remplissage de la cellule de mesure (3) d'un appareil de mesure (10), d'un viscosimètre et/ou d'un densimètre, en particulier d'un viscosimètre rotatif, dans lequel un échantillon (2) est introduit dans la cellule de mesure (3) par une pompe (1) par l'intermédiaire d'une conduite d'échantillon (7), et dans lequel la viscosité et/ou la densité, en particulier dynamique, de l'échantillon (2) est déterminée dans la cellule de mesure (3),
dans lequel un récipient de réception (4) ouvrable de manière réversible, en particulier en forme d'entonnoir, est disposé dans la conduite d'échantillon (7) entre la pompe (1) et la cellule de mesure (3), pour l'échantillon (2),
- dans lequel le récipient de réception (4) est ouvert et l'échantillon (2) est introduit dans le récipient de réception (4), après quoi le récipient de réception (4) est fermé,
- dans lequel le récipient de réception (4) est connecté à la pompe (1) par l'intermédiaire d'une conduite de pression (9) de sorte que, lorsqu'une pression est appliquée dans le récipient de réception (4), une part de l'échantillon (2) est évacuée du récipient de réception (4) et introduite dans la cellule de mesure (3).

2. Procédé selon la revendication 1, **caractérisé en ce que** le récipient de réception (4) présente un raccord de pompe (41) et une sortie d'échantillon (42), dans lequel le raccord de pompe (41) est disposé dans le sens de la gravité au-dessus de la colonne d'échantillon et/ou de la sortie d'échantillon (42), en particulier dans le couvercle (43) du récipient de réception (4),
- dans lequel la pompe (1) est une pompe à air et de l'air est introduit dans le récipient de réception (4) par l'intermédiaire de la pompe (1) et la conduite de pression (9), et l'échantillon (2) est soumis à une pression, en particulier définie, dans le récipient de réception (4),
- dans lequel l'échantillon est introduit dans la conduite d'échantillon (7) et la cellule de mesure (3) par l'intermédiaire de la sortie d'échantillon (42) en raison de la pression dans le récipient de réception (4).

3. Procédé selon la revendication 1 ou 2, **caractérisé en ce qu'**une conduite d'évacuation d'échantillon (5) est disposée en sortie de la cellule de mesure (3), conduite avec laquelle l'échantillon est évacué de la cellule de mesure (3) en particulier dans un récipient à déchets, dans lequel au moins une vanne (6) est disposée dans la conduite d'évacuation d'échantillon (5) et/ou la cellule de mesure (3), vanne avec laquelle la conduite d'évacuation d'échantillon (5) peut être fermée et l'écoulement de l'échantillon (2) dans la conduite d'échantillon (7) vers la cellule de mesure (3) au niveau et/ou à partir de la cellule de mesure (3) dans la conduite d'évacuation d'échantillon (5) est ainsi interrompu lorsque la quantité de remplissage souhaitée de l'échantillon (2) dans la cellule de mesure (3) est atteinte.

4. Procédé selon l'une quelconque des revendications précédentes, **caractérisé en ce qu'**au moins un capteur (8) est disposé dans la conduite d'évacuation d'échantillon (5), capteur dont l'état est transmis à une unité de commande, dans lequel la présence de l'échantillon (2) dans la conduite d'évacuation d'échantillon (5) et/ou la cellule de mesure (3) est détectée au moyen du capteur (8), dans lequel la pompe (1) est arrêtée et/ou la vanne (6) est fermée en particulier lors de la détection de l'échantillon (2) par le capteur (8).

5. Procédé selon l'une quelconque des revendications précédentes, **caractérisé en ce que** la cellule de mesure (3) et/ou la conduite d'échantillon (7) et/ou le récipient de réception (4) et/ou la conduite d'évacuation d'échantillon (5) sont débarrassés de résidus de l'échantillon (2) après la mesure par un produit de nettoyage introduit, en particulier par l'intermédiaire du récipient de réception (4), dans lequel, après le nettoyage, de l'air est pompé pour le séchage de la cellule de mesure (3) et/ou la conduite d'échantillon et/ou le récipient de réception (4) et/ou la conduite d'évacuation d'échantillon (5) à travers celle-ci au moyen de la pompe (1).

6. Procédé selon l'une quelconque des revendications précédentes, **caractérisé en ce que** deux capteurs (8a, 8b), en particulier des barrières lumineuses, sont disposés dans la conduite d'échantillon (7) ou la conduite d'évacuation d'échantillon (5), dans lequel le temps nécessaire à l'échantillon (2) pour passer du premier capteur (8a) au second capteur (8b) est mesuré et le comportement d'écoulement de l'échantillon (2) peut en être déduit.

7. Procédé selon l'une quelconque des revendications précédentes, **caractérisé en ce qu'**après une première mesure dans la cellule de mesure (3), l'échantillon (2) déjà mesuré est évacué de la cellule de mesure (3) par la pompe (1), dans lequel une quantité supplémentaire de l'échantillon (2) est alors introduite dans la cellule de mesure (3) par l'intermédiaire du récipient de réception (4) au moyen de la pompe (1) et la mesure est à nouveau effectuée, dans lequel le remplacement de l'échantillon (2) et la mesure sont en particulier effectués plusieurs fois, et/ou
**en ce que** le temps nécessaire à l'échantillon (2) pour remplir la cellule de mesure (3) est déterminé par un modèle mathématique, dans lequel le modèle mathématique tient compte de la température de l'échantillon (2) et/ou de la cellule de mesure (3), et de sorte qu'une quantité définie de l'échantillon (23) est ainsi introduite, en particulier de manière répétée, dans la cellule de mesure (3).

8. Procédé selon l'une quelconque des revendications précédentes, **caractérisé en ce qu'**une unité de thermorégulation (11) est prévue, avec laquelle l'échantillon (2) dans le récipient de réception (4) est chauffé ou refroidi à une température définie, et/ou
**en ce qu'**une unité magnétique, en particulier un électroaimant (12) ou aimant permanent, est disposée en particulier dans la zone du récipient de réception (4), unité avec laquelle des particules magnétiques dans l'échantillon (2) sont séparées et ainsi empêchées de pénétrer dans la cellule de mesure (3).

9. Appareil de mesure (10), en particulier viscosimètre ou viscosimètre rotatif, pour mesurer la viscosité et/ou la densité, en particulier dynamique, d'un échantillon (2), en particulier pour mettre en œuvre un procédé selon l'une quelconque des revendications 1 à 8, comprenant au moins une cellule de mesure (3) et une pompe (1), dans lequel la pompe (1) est reliée à la cellule de mesure (3) par l'intermédiaire d'une conduite d'échantillon (7), **caractérisé en ce qu'**un récipient de réception (4) fermable de manière réversible, en particulier en forme d'entonnoir, en particulier un entonnoir de remplissage, est disposé dans la conduite d'échantillon (7) entre la pompe (1) et la cellule de mesure (3) pour la réception de l'échantillon (2), dans lequel l'échantillon (2) peut être introduit dans le récipient de réception (4), dans lequel le récipient de réception (4) est relié à la pompe (1) de sorte que, lors de l'application d'une pression dans le récipient de réception (4) par l'intermédiaire de la pompe (1), une part de l'échantillon (2) est évacuée du récipient de réception (4) et peut être introduite dans la cellule de mesure (3) par l'intermédiaire de la conduite d'échantillon (7).

10. Appareil de mesure (10) selon la revendication 9, **caractérisé en ce que** le récipient de réception (4) présente un raccord de pompe (41) et une sortie d'échantillon (42), dans lequel le raccord de pompe (41) est disposé dans le sens de la gravité au-dessus de la sortie d'échantillon (42), en particulier dans le couvercle (43) du récipient de réception (4),

11. Appareil de mesure (10) selon l'une quelconque des revendications 9 ou 10, **caractérisé en ce qu'**une conduite d'évacuation d'échantillon (5) est disposée en aval de la cellule de mesure (3), conduite avec laquelle l'échantillon peut être évacué de la cellule de mesure (3), en particulier dans un récipient à déchets, dans lequel au moins une vanne (6) est disposée dans la conduite d'évacuation d'échantillon (5) et/ou la cellule de mesure (3), vanne avec laquelle l'écoulement de l'échantillon (2) provenant de la cellule de mesure (3) ou dans la conduite d'évacuation d'échantillon (5) peut être interrompu.

12. Appareil de mesure (10) selon la revendication 11, **caractérisé en ce qu'**au moins un capteur (8), en particulier une barrière lumineuse, est disposé dans la conduite d'évacuation d'échantillon (5), dans lequel la présence de l'échantillon (2) dans la conduite d'évacuation d'échantillon (5) et/ou la cellule de mesure (3) peut être détectée au moyen du capteur (8), dans lequel la pompe (1) peut être arrêtée par un dispositif unité de commande et/ou la vanne (6) peut être fermée, en particulier lors de la détection de l'échantillon (2) par le capteur (8).

13. Appareil de mesure (10) selon l'une quelconque des revendications 9 à 12, **caractérisé en ce que** deux capteurs (8a, 8b), en particulier des barrières lumineuses, sont disposés dans la conduite d'échantillon (7) ou la conduite d'évacuation d'échantillon (5), dans lequel l'appareil de mesure (10) présente une unité d'évaluation, dans lequel le temps nécessaire à l'échantillon (2) pour passer du premier capteur (8a) au second capteur (8b) peut être déterminé au moyen de l'unité d'évaluation pour déterminer le comportement d'écoulement de l'échantillon (2).

14. Appareil de mesure (10) selon l'une quelconque des revendications 9 à 13, **caractérisé en ce que** l'appareil de mesure (10) présente un dispositif de commande, dans lequel le dispositif de commande est conçu de sorte qu'après une mesure dans la cellule de mesure (3), l'échantillon (2) déjà mesuré peut être évacué de la cellule de mesure (3) par la pompe (1), et une quantité supplémentaire définie et précise de l'échantillon (2) peut être introduite dans la cellule de mesure (3) par l'intermédiaire du récipient de réception (4) au moyen de la pompe (1) et la mesure peut ainsi être répétée plusieurs fois de suite, et/ou
**en ce qu'**une vanne de décharge de pression (45) est raccordée dans le récipient de réception (4) ou au niveau de celui-ci, de sorte que de la pression puisse être relâchée du récipient de réception (4), dans lequel la vanne de décharge de pression (45) est disposée en particulier dans la zone du couvercle du récipient de réception (4) ou de la conduite de pression (9).

15. Appareil de mesure (10) selon l'une quelconque des revendications 9 à 14, **caractérisé en ce que** l'appareil de mesure (10) présente une unité de thermorégulation (11) disposée dans la zone du récipient de réception (4) ou autour du récipient de réception (4), unité avec laquelle l'échantillon (2) dans le récipient de réception (4) peut être chauffé ou refroidi à une température définie, et/ou
**en ce qu'**une unité magnétique (12), en particulier un électroaimant ou un aimant permanent, est disposée en particulier dans la région du récipient de réception (4), unité avec laquelle des particules magnétiques dans l'échantillon (2) peuvent être séparées et/ou stockées dans le récipient de réception (4).
